# FASCICULE DE BREVET EUROPEEN

(11) **EP 0 562 923 B1**
(45) Date de publication et mention de la délivrance du brevet: **18.12.1996**
(21) Numéro de dépôt: 93400706.3
(22) Date de dépôt: 19.03.1993
(51) Int. Cl.: B60B 33/02

(54) **Roulette pivotante pour chariot**
Wagenlaufrolle
Castor for carts

(30) Priorité: 23.03.1992 FR 9203471
(43) Date de publication de la demande: 29.09.1993
(73) Titulaire: GUITEL-ETIENNE MOBILOR, F-93310 Le Pré Saint-Gervais (FR)
(72) Inventeur: Tarrago, Wenceslas, F-74000 Annecy (FR); Bertrand, Claude, F-93600 Aulnay-Sous-Bois (FR)
(74) Mandataire: Hasenrader, Hubert

(56) Documents cités:
- EP-A- 0 370 505
- DE-A- 1 918 357
- FR-A- 1 601 248
- US-A- 3 162 888

## Description

La présente invention concerne une roulette pour chariot ou autre engin mobile, du type comportant une roue susceptible de pivoter autour d'un axe vertical, un palier de support muni d'organes de roulement et présentant dans sa partie inférieure une cuvette annulaire qui est ouverte vers le bas et qui, par sa partie centrale, est fixée rigidement sur l'extrémité inférieure de l'axe vertical de pivotement, une chape de support présentant au moins une joue latérale dont l'extrémité inférieure porte l'axe horizontal de la roue ainsi qu'une calotte annulaire supérieure raccordée à l'extrémité supérieure de la joue latérale, ladite calotte coopérant avec lesdits organes de roulement et étant disposée autour d'un axe vertical de pivotement de façon à pouvoir tourner autour de ce dernier, ladite roulette comportant en outre des moyens pour verrouiller simultanément la chape par rapport à l'axe vertical de pivotement et la roue par rappport à son axe horizontal.

Une telle roulette pivotante est, par exemple, connue par le brevet allemand DE-C-2 459 580. Dans ce brevet les moyens de verrouillage simultané de la roue et de la chape comportent une lame disposée entre la roue et la calotte et susceptible de coopérer avec le bandage de la roue et avec la cuvette pour immobiliser l'ensemble par actionnement d'un organe de manoeuvre monté basculant à une première extrémité de ladite lame et comportant une surface de came susceptible de coopérer avec la calotte pour écarter ladite première extrémité de lame. La lame est montée à sa partie médiane sur un axe transversal de telle manière qu'elle peut pivoter autour de cet axe transversal sous l'action de l'organe de manoeuvre agissant à l'encontre d'un ressort de rappel interposé entre la lame et la calotte. L'écartement de la première extrémité de lame entraîne une remontée de l'autre extrémité de lame qui coopère avec des crans prévus sur le pourtour de la cuvette pour immobiliser la roulette par rapport à l'axe vertical de pivotement. Cette construction nécessite la réalisation et le montage d'au moins quatre pièces individuelles :
l'axe transversal, la lame, le ressort de rappel et l'organe de manoeuvre.

US-A-3 162 888 dévoile une roulette pivotante conforme au préambule de la revendication 1.

Dans ce document, les moyens de verrouillage comportent une lame à ressort fixée par sa partie médiane sur la chape au moyen d'un axe et présentant deux branches divergentes et oscillantes dont l'une est destinée à bloquer la roue et l'autre à bloquer la cuvette sous l'action d'un levier de manoeuvre articulé sur l'extrémité libre de la branche inférieure du ressort et destiné à écarter les deux branches. Cette disposition nécessite une fixation angulaire précise de la lame à ressort pour que les deux branches s'éloignent respectivement de la roue et de la cuvette lorsqu'on libère le levier de manoeuvre.

L'objet de la présente invention est de proposer une roulette pivotante dans laquelle les moyens de blocage simultané de la chape et de la roue sont d'une conception simple et nécessitent un nombre réduit de pièces.

La présente invention remédie à cet inconvénient par les caractéristiques définies dans la revendication 1.

Avantageusement la cuvette présente sur son pourtour inférieur une pluralité de dents, et l'extrémité libre du bras de levier comporte une paroi verticale destinée à loger dans l'espace séparant deux dents consécutives pour verrouiller la chape par rapport à l'axe de pivotement lorsque le bras de manoeuvre est basculé vers le bas.

Avantageusement il est prévu sur la première branche de la lame ressort des languettes de blocage susceptibles de coopérer avec le bandage de la roue.

D'autres avantages et caractéristiques de l'invention ressortiront à la lecture de la decription suivante d'un mode de réalisation, faite à titre d'exemple et en référence aux dessins annexés sur lesquels :
la figure 1 est une vue en élévation et en coupe de la roulette pivotante de l'invention, montrant les moyens de verrouillage en position de déblocage, la roue étant libre de rouler sur le sol et de pivoter autour de l'axe vertical de pivotement ;
la figure 2 est une vue en élévation et en coupe de la roulette pivotante, de la figure 1, montrant les moyens de verrouillage en position de blocage ;
la figure 3 est une vue en perspective des moyens de verrouillage simultané de la chape et de la roue selon un premier mode de réalisation ; et
la figure 4 est une vue en perspective des moyens de verrouillage simultané de la chape et de la roue selon un deuxième mode de réalisation.

Tel que représenté sur les dessins annexés, un chariot ou autre plate-forme mobile non représenté(e) comporte une roue 2 qui est susceptible de pouvoir pivoter autour d'un axe vertical de pivotement 3. La roue 2 comporte un axe de rotation horizontal 4 dont les extrémités sont portées par au moins une joue latérale ou fourche 5 d'une chape de support 6 dont l'extrémité supérieure ayant la forme d'une calotte annulaire 7 est montée par l'intermédiaire d'un palier de support 8 sur l'extrémité inférieure de l'axe vertical de pivotement 3. On remarquera que l'axe vertical de pivotement est latéralement décalé par rapport au plan vertical passant par l'axe horizontal 4 de la roue 2.

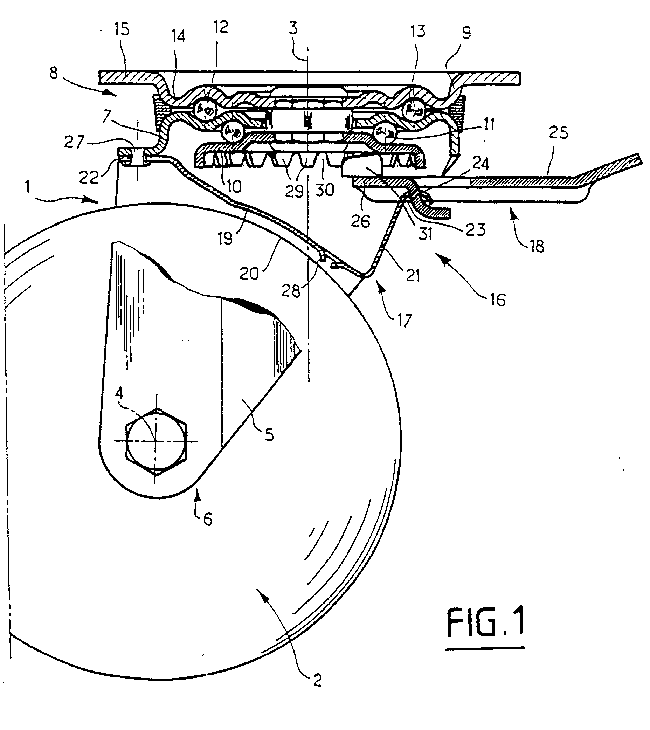

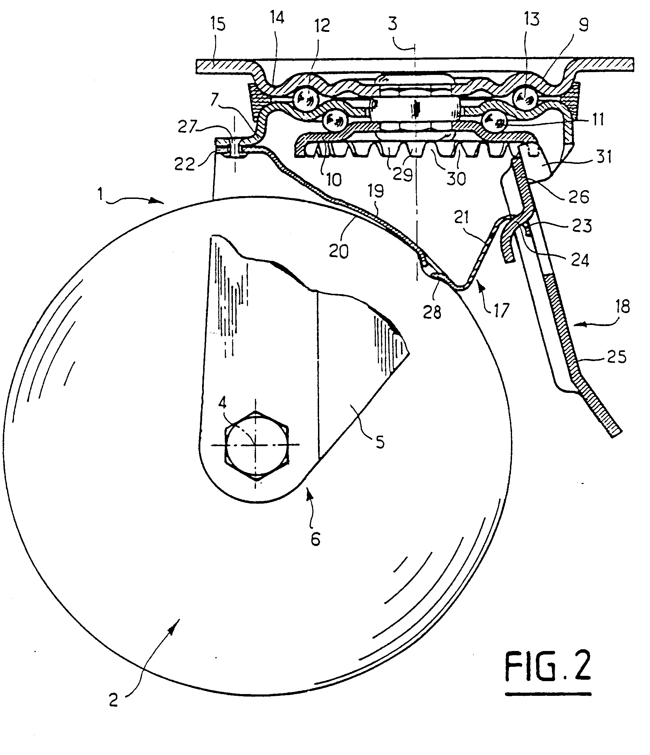

Comme on peut le voir sur les figures 1 et 2, le palier de support 8 comprend une première cuvette annulaire 9 et une deuxième cuvette annulaire 10 fixée, comme la première rigidement sur l'extrémité inférieure de l'axe vertical 3. La deuxième cuvette 10 est ouverte vers le bas. La première cuvette 9 est disposée au-dessus de la deuxième cuvette 10. A son extrémité inférieure, cette cuvette inférieure 10 possède un bord annulaire qui, par sa face supérieure, sert de piste de roulement à une première série de billes de roulement ou organes analogues 11 sur laquelle prend appui la calotte annulaire 7 de la chape de support 6. La cuvette supérieure 9 délimite une piste de roulement en forme de gorge 12 ouverte vers le bas et dans laquelle est logée une deuxième série de billes de roulement 13 reposant sur la face supérieure de la calotte annulaire 7.

Telle que représentée sur les figures 1 et 2, la cuvette supérieure 9 recouvre la calotte annulaire 7 et la cuvette inférieure 10 qui est également entourée par ladite calotte 7. La cuvette supérieure 9 présente une gorge annulaire extérieure 14 adjacente à la gorge 12, ouverte vers le haut, d'une profondeur légèrement supérieure à celle de la gorge 12 et se terminant par un épaulement horizontal 15 légèrement surélevé et servant, par exemple, à la fixation du palier 8 sur l'embase d'un chariot non représenté.

La roulette pivotante 1 comporte également des moyens 16 pour verrouiller simultanément la chape de support 6 et la roue 2. Ces moyens de verrouillage 16 comprennent une lame ressort coudée 17 et un levier de manoeuvre 18.

La lame ressort coudée 17 présente une première branche 19 qui s'étend à faible distance de la partie supérieure du bandage 20 de la roue 2 et une deuxième branche 21 sensiblement prependiculaire à la première branche 19 et qui sétend vers le haut et est située sous la cuvette annulaire 10. La lame ressort 17 est fixée, par l'extrémité 22 de la première branche 19 éloignée de la deuxième branche 21, à la partie de la calotte annulaire 7 située au-dessus de l'axe de rotation 4 de la roue 2, à l'aide de moyens de fixation connus. Comme on le voit sur les figures 1 et 2, l'autre extrémité 23 de la lame ressort 17 est libre et disposée au-dessous du bord extérieur de la cuvette annulaire 10, situé de l'autre côté de l'axe de pivotement 3 par rapport au point de fixation de la lame ressort 17 sur la calotte 7.

Le levier de manoeuvre 18 est articulé par sa partie médiane sur l'extrémité libre 23 de la lame ressort 17 de manière qu'il puisse pivoter autour d'un axe de basculement 24 sensiblement parallèle à l'axe horizontal 4 de la roue 2. Ce levier de manoeuvre 18 présente d'un côté de l'axe de basculement 24 un bras de manoeuvre 25 permettant de basculer ledit levier de manoeuvre 18 et de l'autre côté de l'axe de basculement 24, plus précisément du côté de l'axe de basculement situé sous la calotte annulaire 7, un bras de levier 26 dont l'extrémité libre est susceptible de coopérer avec la paroi inférieure de la cuvette annulaire 10 pour exercer sur la deuxième branche 21 une force dirigée vers le bas par actionnement du bras de manoeuvre 25 vers le bas.

L'actionnement du bras de manoeuvre 25 vers le bas provoque un basculement de la lame ressort coudée autour d'un axe d'oscillation 27 parallèle à l'axe horizontal 4 de la roue 2. Cette manoeuvre met la première branche 19 de la lame ressort 17 en appui contre la partie supérieure du bandage 20 de la roue 2 ce qui provoque le blocage de ce dernier. De préférence cette première branche 19 présente des languettes de blocage 28 qui coopèrent avec le bandage 20, lorsque les moyens de verrouillage 16 sont dans la position de blocage comme cela est représenté sur la figure 2.

La cuvette annulaire 10 présente sur son pourtour des dents 29 dirigées vers le bas et séparées par des espaces 30.

L'extrémité libre du bras de levier 26 comporte une paroi verticale 31 destinée à loger dans un espace 30 séparant deux dents pour verrouiller la chape de support 6 par rapport à l'axe de pivotement 3 lorsque le bras de manoeuvre 25 est basculé vers le bas.

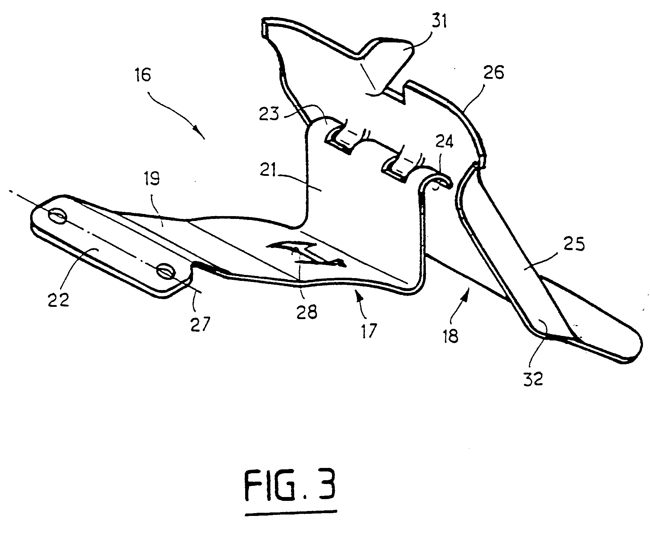

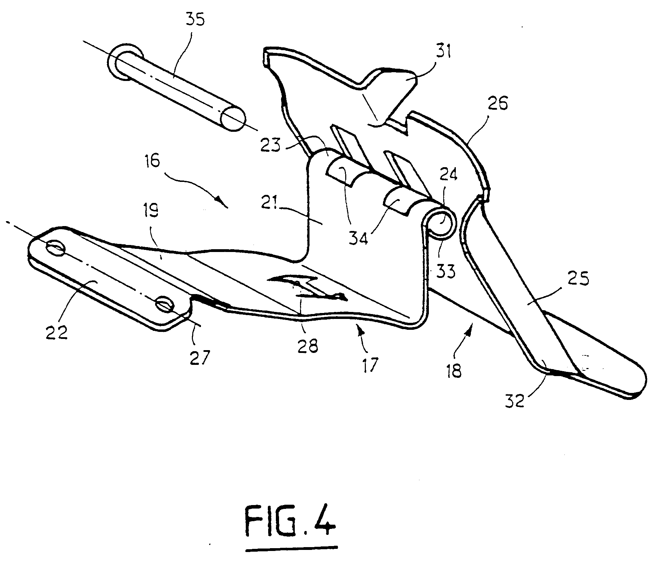

Les figures 3 et 4 sont des vues en perspective des moyens de verrouillage 16. Le levier de manoeuvre 18 est réalisé par pliage et découpe d'une plaque de tôle, et il comporte des nervures de renforcement 32. Les languettes de blocage 28 sont également réalisées par découpe dans la paroi de la lame ressort 17. On voit sur la figure 3 que les moyens d'articulation du levier de manoeuvre 18 sur l'extrémité libre 23 de la lame ressort coudée 17 sont réalisés par des découpes et des pliages appropriés.

La figure 4 montre un deuxième mode de réalisation des moyens d'articulation du levier de manoeuvre 18 sur l'extrémité libre 23 de la lame ressort coudée 17. L'extrémité libre 23 de la lame ressort 17 est recourbée pour former un tube 33, qui présente des échancrures dans lesquelles logent des languettes recourbées 34 tirées du levier de manoeuvre 18 par découpe. Une broche 35 est disposée dans le tube 33 et y est maintenue par des moyens connus.

## Revendications

1. Roulette pivotante comportant :
une roue (2) susceptible de pivoter autour d'un axe vertical (3),
un palier de support (8) muni d'organes de roulement et présentant dans sa partie inférieure une cuvette annulaire (10) qui est ouverte vers le bas et qui par sa partie centrale est fixée rigidement sur l'extrémité inférieure de l'axe vertical de pivotement (3),
une chape de support (6) présentant au moins une joue latérale (5) dont l'extémité inférieure porte l'axe horizontal (4) de la roue (2) ainsi qu'une calotte annulaire supérieure (7) raccordée à l'extémité supérieure de la joue latérale (5), ladite calotte (7) coopérant avec lesdits organes de roulement et étant disposée autour de l'extrémité inférieure dudit axe vertical (3) de pivotement de façon à pouvoir tourner autour de ce dernier, et
comportant en outre des moyens (16) pour verrouiller simultanément la chape (6) par rapport à l'axe vertical de pivotement (3) et la roue (2) par rapport à son axe horiozontal (4),
lesdits moyens de verrouillage (16) comportant :
une lame ressort (17) coudée qui est fixée par rapport à ladite calotte (7) de manière à pouvoir osciller autour d'un axe d'oscillation (27) sensiblement parallèle à l'axe horizontal (4) de la roue (2), et
un levier de manoeuvre (18) qui est articulé dans sa partie médiane sur une extrémité libre (23) de ladite lame ressort (17) de manière à pouvoir pivoter autour d'un axe de basculement (24) sensiblement parallèle à l'axe horizontal (4) de la roue (2),
ladite lame ressort (17) étant disposée sous ladite calotte (7) et présentant, du côté de l'axe d'oscillation (27), une première branche (19) s'étendant au voisinage du bandage (20) de la roue (2) et susceptible de coopérer avec celui-ci pour immobiliser la roue (2),
ledit levier de manoeuvre (18) présentant, d'un côté de l'axe de basculement (24), un bras de manoeuvre (25) pour basculer ledit levier de manoeuvre (18), et, de l'autre côté dudit axe de basculement (24), un bras de levier (26) dont l'extrémité libre est susceptible de coopérer avec un moyen de coopération, par actionnement dudit bras de manoeuvre (25) pour exercer sur l'extrémité libre (23) de ladite lame ressort (17) une force dirigée vers le bas,
caractérisée en ce que la lame ressort (17) est fixée à ladite calotte au niveau de l'axe d'oscillation (27) par une extrémité fixe (22) opposée à son extrémité libre (23) et présente, du côté opposé à ladite extrémité fixe (22) une deuxième branche (21) disposée sous la cuvette annulaire (10) et s'étendant vers le haut jusqu'à son extrémité libre (23),
en ce que ledit bras de levier est disposé sous ladite cuvette (10), et
en ce que ledit moyen de coopération est constitué par la proi de ladite cuvette (10).

2. Roulette selon la revendication 1, caractérisée en ce que la cuvette (10) présente sur son pourtour inférieur une pluralité de dents (26),
et en ce que l'extrémité libre du bras de levier (26) comporte une paroi verticale (31) destinée à loger dans un espace (30) séparant deux dents consécutives pour verrouiller la chape (6) par rapport à l'axe vertical de pivotement (3) lorsque le bras de manoeuvre (25) est basculé vers le bas.

3. Roulette selon l'une quelconque des revendications 1 ou 2, caractérisée en ce qu'il est prévu sur la première branche (19) de la lame ressort (17) des languettes de blocage (28) susceptibles de coopérer avec le bandage de la roue (2).

## Claims

1. A pivoting castor comprising:
a wheel (2) capable of pivoting about a vertical axis (3),
a support bearing (8) provided with bearing members and having in its lower part an annular dish (10) that opens downwards and is fixed rigidly by its central part to the lower end of the vertical axis of pivoting (3),
a supporting yoke (6) having at least one lateral cheek (5), the lower end of which carries the horizontal axis (4) of the wheel (2) and an upper annular cap (7) connected to the upper end of the lateral cheek (5), said cap (7) cooperating with said bearing members and being arranged around the lower end of said vertical axis (3) of pivoting so as to be able to rotate about the latter, and
further comprising means (16) for simultaneously locking the yoke (6) in relation to the vertical axis of pivoting (3) and the wheel (2) relative to its horizontal axis (4),
said locking means (16) comprising:
an elbowed blade spring (17) that is fixed in relation to said cap (7) so as to be able to oscillate about an axis of oscillation (27) substantially parallel to the horizontal axis (4) of the wheel (2), and
an operating lever (18) that is hinged at its median part to a free end (23) of said blade spring (17) so as to be able to pivot about a tilting axis (24) substantially parallel to the horizontal axis (4) of the wheel (2),
said blade spring (17) being arranged under said cap (7) and having, on the side of the axis of oscillation (27), a first branch (19) extending in the vicinity of the tyre (20) of the wheel (2) and capable of cooperating with said tyre in order to immobilise the wheel (2),
said operating lever (18) having, on one side of the tilting axis (24), an operating arm (25) for tilting said operating lever (18) and, on the other side of said tilting axis (24), a lever arm (26), the free end of which is capable of co-operating with a co-operation means, by actuating said operating arm (25) in order to exert a downward force on the free end (23) of said blade spring (17),
characterised in that the blade spring (17) is fixed to said cap at the level of the axis of oscillation (27) by a fixed end (22) opposite its free end (23) and has, on the opposite side to said fixed end (22), a second branch (21) arranged under the annular dish (10) and extending upwards as far as its free end (23), in that said lever arm is arranged under said dish (10), and
in that said co-operation means is constituted by the wall of said dish (10).

2. A castor according to Claim 1, characterised in that the dish (10) has on its lower periphery a plurality of teeth (26),
and in that the free end of the lever arm (26) comprises a vertical wall (31) intended to be lodged in a space (30) separating two consecutive teeth in order to lock the yoke (6) relative to the vertical axis of pivoting (3) when the operating arm (25) is tilted downwards.

3. A castor according to any one of Claims 1 or 2, characterised in that locking tongues (28) capable of co-operating with the tyre of the wheel (2) are provided on the first branch (19) of the blade spring (17).

## Patentansprüche

1. Lenkrolle mit
einem um eine senkrechte Achse (3) schwenkbaren Rad (2),
einem Stützlager (8), das mit Wälzkörpern versehen ist und in seinem unteren Teil eine ringförmige Schale (10) aufweist, die nach unten offen ist und mit ihrem Mittelteil am unteren Endstück der senkrechten Schwenkachse (3) starr befestigt ist,
einer Traggabel (6), die wenigstens eine Seitenwange (5) aufweist, deren unteres Endstück die waagerechte Achse (4) des Rades (2) trägt, sowie eine mit dem oberen Endstück der Seitenwange (5) verbundene obere ringförmige Kappe (7), die mit den genannten Wälzkörpern zusammenwirkt und um das untere Endstück der senkrechten Schwenkachse (3) so angeordnet ist, daß sie um letztere drehbar ist, und
ferner mit Einrichtungen (16) zum gleichzeitigen Verriegeln der Gabel (6) in bezug auf die senkrechte Schwenkachse (3) und des Rades (2) in bezug auf seine waagerechte Achse (4),
wobei die Verriegelungseinrichtungen (16) umfassen:
ein abgewinkeltes Federblatt (17), das an der Kappe (7) so befestigt ist, daß es um eine zur waagerechten Achse (4) des Rades (2) im wesentlichen parallele Schwingachse (27) schwingen kann, und
einen Betätigungshebel (18), der mit seinem Mittelabschnitt an einem freien Endstück (23) des Federblatts (17) so angelenkt ist, daß er um eine zur waagerechten Achse (4) des Rades (2) im wesentlichen parallele Schwenkachse (24) schwenken kann,
wobei das Federblatt (17) unterhalb der Kappe (7) angeordnet ist und auf der Seite der Schwingachse (27) einen ersten Schenkel (19) aufweist, der sich in der Nähe der Lauffläche (20) des Rades (2) erstreckt und mit dieser zum Feststellen des Rades (2) zusammenzuwirken vermag,
der Betätigungshebel (18) auf einer Seite der Schwenkachse (24) einen Betätigungsarm (25) zum Schwenken des Betätigungshebels (18) aufweist und auf der anderen Seite der Schwenkachse (24) einen Hebelarm (26), dessen freies Endstück mit einer mitwirkenden Einrichtung zusammenzuwirken vermag, indem der Betätigungsarm (25) betätigt wird, um auf das freie Endstück (23) des Federblatts (17) eine nach unten gerichtete Kraft auszuüben,
dadurch gekennzeichnet,
daß das Federblatt (17) an der genannten Kappe auf der Höhe der Schwingachse (27) durch ein seinem freien Endstück (23) entgegengesetzten festen Endstück (22) befestigt ist und auf der dem festen Endstück (22) entgegengesetzten Seite einen zweiten Schenkel (21) aufweist, der unterhalb der ringförmigen Schale (10) angeordnet ist und sich nach oben bis zu seinem freien Endstück (23) erstreckt,
daß der genannte Hebelarm unterhalb der Schale (19) angeordnet ist, und
daß die genannte mitwirkende Einrichtung von der Wand der Schale (10) gebildet ist.

2. Rolle nach Anspruch 1, dadurch gekennzeichnet,
daß die Schale (10) auf ihrem unteren Umfang eine Vielzahl Zähne (29) aufweist, und
daß das freie Endstück des Hebelarms (26) eine senkrechte Wand (31) zur Aufnahme in einer zwei aufeinanderfolgende Zähne trennenden Lücke (30) aufweist, um die Gabel (6) in bezug auf die senkrechte Schwenkachse (3) zu verriegeln, wenn der Betätigungsarm (25) nach unten geschwenkt wird.

3. Rolle nach einem der Ansprüche 1 und 2,
dadurch gekennzeichnet, daß auf dem ersten Schenkel (19) des Federblatts (17) Blockierzungen (28) vorgesehen sind, die mit der Lauffläche des Rades (2) zusammenzuwirken vermögen.
